# EUROPÄISCHE PATENTSCHRIFT

(11) **EP 2 705 921 B1**
(45) Veröffentlichungstag und Bekanntmachung des Hinweises auf die Patenterteilung: **06.01.2021**
(21) Anmeldenummer: 13003836.7
(22) Anmeldetag: 01.08.2013
(51) Int. Cl.: B23K 3/02

(54) **Lötkolben, dessen Spitze durch einen Laserstrahl erhitzt wird**
Soldering iron, the tip of which is heated by laser beam
Fer à souder dont la pointe est chauffée par faisceau laser

(30) Priorität: 29.08.2012 DE 202012008255 U
(43) Veröffentlichungstag der Anmeldung: 12.03.2014
(73) Patentinhaber: Apex Brands, Inc., Apex, NC 27539 (US)
(72) Erfinder: Fischer, Thomas, 74321 Bietigheim (DE); Hofmann, Stephan, 74385 Pleidelsheim (DE)
(74) Vertreter: Schröer, Gernot H.

(56) Entgegenhaltungen:
- EP-A2- 0 367 705
- DE-A1- 19 839 482
- JP-A- H07 290 266
- JP-A- 2000 334 562
- JP-A- 2006 175 476

## Beschreibung

Die vorliegende Erfindung betrifft einen Lötkolben gemäß dem Oberbegriff des Anspruchs 1 (siehe z.B. JP 2006 175476 A).

Es ist bekannt, dass eine Lötspitze mittels eines stromdurchflossenen Widerstands, beispielsweise einer gewickelten Spule oder einem beliebig geformten Widerstandsdraht, erhitzbar ist. Dabei kann eine Wärmeübertragung zwischen dem stromdurchflossenen Widerstand und der Lötspitze insbesondere dann vorteilhaft zustande kommen, wenn der Widerstand in direktem Kontakt mit der Lötspitze steht. Allerdings hat sich herausgestellt, dass der zum Erhitzen der Lötspitze vorgesehene Widerstand einen erhöhten Verschleiß aufweißt, insbesondere dann, wenn durch ihn zeitweise große Ströme geleitet werden. Bedenklich ist auch, dass die Herstellung stromdurchflossener gewickelter Widerstände kostspielig ist und die gewickelten Widerstände schwer im Lötkolben einbaubar sind. Außerdem benötigen stromdurchflossene Widerstände eine gewisse Warmlaufzeit, um die daran gekoppelte Lötspitze auf Betriebstemperatur zu bringen. Auch die Tatsache, dass sich die Materialeigenschaften des stromdurchflossenen Widerstands mit der Zeit durch das wiederholte Bestromen ändern, kann zu einem ungleichmäßigen Aufheizen der Lötspitze führen, wodurch es zu einem verschlechterten Arbeitsergebnis kommen kann. Dies könnte beispielsweise die Qualität der Lötnaht negativ beeinflussen.

Um mittels eines Lötkolbens einen konzentrierten, hohen sowie schnellen Wärmeeintrag in die zu bearbeitenden Werkstücke einzubringen, werden in der Praxis Laserlötverfahren eingesetzt. Das Laserlöten wird vornehmlich in automatisierten Verfahren mittels Robotern verwendet. Dies liegt daran, weil ein Laserstrahl vom Roboter präzise entlang der zu bearbeitenden Werkstücke geführt werden muss, um einen Wärmeeintrag durch den Laserstrahl konstant zu halten. Dabei kommt es vor allem darauf an, dass der Laserstrahl mit gleichbleibendem Abstand zur Lötstelle geführt wird, um keine Beschädigungen an den Werkstücken zu verursachen.

Wegen eines erhöhten Verletzungsrisikos sowie mangelhaften Resultaten in der Bearbeitung von Werkstücken, werden Handlaserkolben bisher sehr selten in Gebrauch genommen. Dies liegt insbesondere auch daran, weil der Benutzer den von Hand gehaltenen Lötkolben nicht vergleichbar präzise über die zu bearbeitenden Werkstücke führen kann, wie dies mittels eines Roboters möglich ist.

Bei Handlaserkolben tritt der Laserstrahl aus dem Lötkolben aus und trifft direkt auf die zu bearbeiteten Werkstücke. Der austretende Laserstrahl kann bei unsachgemäßem Gebrauch zu schweren Verletzungen des Benutzers sowie zu Beschädigungen der zu bearbeitenden Werkstücke führen.

Die DE 40 17 286 A1 offenbart eine Laservorrichtung mit einer Lötspitze, die eine Sackbohrung aufweist, in deren offenes Ende ein Lichtleiter eingesteckt ist. An einem dem Arbeitsende benachbarten Ende kann die Sackbohrung verjüngt ausgebildet sein, wobei die aus dem Lichtleiter austretende Laserenergie in die Bohrung benachbart zu dem Arbeitsende der Lötspitze eintritt und hier in Wärmeenergie umgewandelt wird, die zur Erwärmung des Arbeitsendes der Lötspitze dient.

Die DE 196 01 181 A1 offenbart eine Lötvorrichtung mit einer Lötspitze, die als Hohlkörper ausgebildet ist und in ihrem Inneren eine Licht absorbierende Oberfläche aufweist, auf die ein Laserlichtstrahl über einen Lichtleiter geführt wird. Mittels eines auf der Außenwand der Lötspitze befestigten Temperatursensors wird die Temperatur der Lötspitze gemessen, wobei das Messsignal über eine Anschlussleitung einer Lasersteuereinheit zugeführt werden kann.

Die US 5,948,286 A offenbart eine Lötvorrichtung mit einer Lasereinheit, einer Ultraschalleinheit und einer Lötspitze, in deren Inneren ein Lichtleiter geführt wird. Der Lichtleiter endet kurz vor dem geschlossenen Ende der Lötspitze, wodurch eine Lücke entsteht, die circa 2 bis 10 mm groß ist.

Die US 5,904,868 A offenbart ein Laserwerkzeug mit einer Lötspitze, die mittels Laserstrahlen erwärmt wird. In der Lötspitze ist eine Sackbohrung vorgesehen, mit welcher eine elektrische Komponente aufnehmbar ist. Mit der durch Laserstrahlen erhitzten Lötspitze kann die elektrische Komponente auf einem Untergrund befestigt beziehungsweise von diesem gelöst werden. An einem Ende der Lötspitze ist ein Laserenergie absorbierendes Material vorgesehen, welches eine Wärmebrücke zur Komponente ausbildet.

Die US 5, 565, 119 A offenbart eine Vorrichtung mit mehreren Laserlötspitzen, die jeweils hohl ausgebildet sind und durch Laserstrahlen erhitzt werden. In dieser Vorrichtung kann zeitgleich an mehreren Stellen Lötarbeit verrichtet werden.

Die EP 0 150 305 B1 offenbart eine Vorrichtung zum Verbinden von Schaltungselementen mit einer Lötspitze, welche einen Laserstrahl empfängt, wobei die Energie des Laserstrahls für die Erwärmung der Lötspitze absorbiert wird. Für einen verbesserten Absorptionsgrad der Laserenergie ist die Innenfläche der Lötspitze mit einer Schwarzkörperoberfläche ausgebildet.

Die EP 0 367 705 A2 offenbart eine mittels Ultraschall unterstütze Laserlötvorrichtung. Die Laserlötvorrichtung umfasst eine Lötspitze, die hohl ausgebildet ist und ein offenes Ende sowie ein geschlossenes Ende vorsieht. Zum Halten eines Lichtleiters ist eine Keramikhülse im Inneren der Lötspitze angeordnet. Optional sieht die Lötspitze eine absorbierende Beschichtung vor, die am geschlossenen Ende der Lötspitze aufgebracht ist. Durch die optische Beschichtung lässt sich das konische Ende der Lötspitze besonders schnell erhitzen, was zusätzlich optional durch eine aufgeraute Oberfläche begünstigt werden könnte.

Die WO 2009/156505 A1 offenbart eine Vorrichtung zum Löten von metallischen Bauteilen mit einem Düsenkörper, der endseitig ein Übertragungselement aufweist, welches als Andruckvorrichtung ausgebildet ist. Über das Übertragungselement wird Wärmeenergie an die zu verbindenden Bauteile übertragen.

Bei den bekannten Laservorrichtungen ist es schwer, die Lötspitze schnell und gleichmäßig zu erhitzen, beziehungsweise diese auf einem gleichbleibenden Temperaturniveau zu halten. Nachteilig ist auch, dass sich bei den bekannten Lötvorrichtungen durch das direkte Bestrahlen der Lötspitze mit einem Laserstrahl über die Zeit die Materialeigenschaften der Lötspitze ändern können, was zu einem unregelmäßigen Arbeitsergebnis führen kann.

Angesichts der durch den bekannten Stand der Technik geschilderten Problematik liegt daher der Erfindung die Aufgabe zugrunde, einen Lötkolben zur Verfügung zu stellen, der mittels einfacher konstruktiver Merkmale schnell betriebsbereit ist sowie eine hohe Lötleistungsfähigkeit zur Verfügung stellt, ohne dabei für den Benutzer gefährlich zu werden. Außerdem ist es die Aufgabe der Erfindung ein effizientes sowie kostengünstiges Verfahren zur Verfügung zu stellen, um einen Lötkolben schnell auf Betriebstemperatur zu bringen.

Eine Lösung der Aufgabe bietet der Gegenstand mit den Merkmalen des Anspruchs 1. Verbesserte Weiterbildungen der Erfindung sind mit den Merkmalen der Unteransprüche gegeben.

Angesichts der Eingangs erwähnten Nachteile der bekannten Praxis sieht die Erfindung einen Lötkolben mit einer Lötspitze vor, die mittels eines in dem Lötkolben zumindest teilweise entlang eines Laserwegs verlaufenden Laserstrahls erhitzbar ist. Im Gegensatz zu bekannten, automatisierten oder von Hand geführten Laserlötkolben ist der erfindungsgemäße Lötkolben derart ausgebildet, dass der Laserstrahl den Lötkolben nicht verlässt, also nicht direkt auf die zu bearbeitenden Werkstücke gelenkt wird. Vielmehr sieht es der erfindungsgemäße Lötkolben vor, dass die Laserleistung zum Erhitzen einer am Lötkolben vorgesehen Lötspitze dient. Es kommt also zu keinem Austritt des Laserstrahls aus dem Lötkolben. Damit wird bei der Erfindung bereits die durch den Laserstrahl erzeugte Laserleistung innerhalb des Lötkolbens in Wärmeenergie umgewandelt, die allerdings nicht wie beim Stand der Technik zum Aufschmelzen eines Lötdrahts, sondern zum Aufheizen der Lötspitze des Lötkolbens dient.

Gemäß der Erfindung verläuft der Laserstrahl zumindest teilweise entlang eines Laserweges innerhalb des Lötkolbens. Als Laserweg ist dabei die Entfernung zwischen dem zum Laserstrahlerzeugen vorgesehenen Mittel, beispielsweise einer Laserdiode, und dem Fokus gemeint, wobei der Fokus die Stelle markiert, an der der Laserstrahl auftrifft, sei es direkt auf der zu erwärmenden Lötspitze oder auf dem später genauer beschrieben Energiewandler, der einen Wärmetransport zur Lötspitze ermöglicht. Je nach Installation des Mittels zum Lasererzeugen verläuft der zurückgelegte Laserweg also ganz innerhalb des Lötkolbens, wenn das lasererzeugende Mittel innerhalb des Lötkolbens vorgesehen ist, oder nur teilweise, wenn das lasererzeugende Mittel innerhalb einer mit dem Lötkolben verbundenen Lötstation. Dies wird auch später noch anhand der Figuren erläutert.

Durch den zum Erhitzen der Lötspitze verwendeten Laserstrahl ist es möglich, die Lötspitze schnell auf Betriebstemperatur zu bringen. Im Vergleich zum eingangs erwähnten gewickelten Widerstand bzw. Widerstandsdraht unterliegt der Laserstrahl ebenfalls keinem vergleichbaren Verschleiß.

Vorteilhaft ist es auch, dass es zur Energieübertragung des Laserstrahls wenig Platz im Lötkolben bedarf, wodurch die Größe des Lötkolbens sowie Herstellungskosten reduziert werden können. Ebenso benötigt der erfindungsgemäße Lötkolben ein reduziertes Maß an Komponenten, wodurch er auf einfache Art und Weise zusammenbaubar ist.

Besonders bedeutend ist es auch, dass sich die Lötspitze des erfindungsgemäßen Lötkolbens konstant, also mit gleichbleibendem Energieeintrag, mittels des Laserstrahls erhitzen lässt, sodass dem Bediener bei der Arbeit eine gleichmäßig erhitzte Lötspitze zur Verfügung steht. Dadurch ist es möglich, dass ein durch den erfindungsgemäßen Lötkolben bearbeitetes Produkt auf einem hohen und gleichbleibenden Qualitätsniveau herstellbar ist.

Vorzugsweise ist ein Energieeintrag mittels des Laserstrahls in die Lötspitze konstant. Dadurch kann die Lötspitze während des Betriebs des Lötkolbens auf einer gleichbleibenden Temperatur gehalten werden, wodurch dem Benutzer die Arbeit mit dem Lötkolben erleichtert wird sowie verbesserte Arbeitsergebnisse zustande kommen. Ein konstanter Energieeintrag lässt sich insbesondere dann erreichen, wenn die Laserleistung des Laserstrahls über eine vorgegebene Zeit gleichbleibt. Je nach erwünschter Lötspitzentemperatur ist es allerdings auch möglich, dass die Laserleistung variabel einstellbar ist. Somit können mittels des Lötkolbens unterschiedliche Werkstücke und Lotmaterialien verarbeitet werden. Besonders vorteilhaft ist es, wenn sich die Laserleistung stufenlos einstellen lässt, sodass die Lötspitzentemperatur besonders gut unterschiedlichen Rahmenbedingungen anpassbar ist. Beispielsweise kann die Laserleistung direkt am Lötkolben und/oder an einer vorgesehenen Lötstation eingestellt werden.

Gemäß einer besonderen Ausführungsform der Erfindung umfasst der Lötkolben einen Energiewandler, der zur Absorption des Laserstrahls vorgesehen ist und mit der Lötspitze gekoppelt ist, um diese zu erhitzen. Dabei trifft der Laserstrahl direkt auf den Energiewandler, sodass dieser die im Laserstrahl vorhandene Laserleistung absorbiert. Die durch den Energiewandler absorbierte Laserleistung führt zur Erhitzung des Energiewandlers, wobei die in ihm erzeugte Wärmeenergie auf die gekoppelte Lötspitze transferierbar ist, um diese zu erhitzen. Insbesondere ermöglicht es der Energiewandler die Laserleistung punktuell zu absorbieren, jedoch gleichmäßig über zumindest Teile seiner Oberfläche in Form von Wärmeenergie an die Lötspitze abzugeben. Dadurch lässt sich die zum Bearbeiten von Werkstücken verwendete Lötspitze des erfindungsgemäßen Lötkolbens gleichmäßig und schnell aufwärmen, sodass durch sie ein qualitativ hochwertiges Ergebnis in der Bearbeitung von Werkstücken möglich ist.

Vorteilhaft ist es auch, wenn ein Energieeintrag mittels des Laserstrahls in den Energiewandler konstant ist. Dadurch ist es möglich, eine konstante Wärmeübertragung mittels des Energiewandlers auf die damit gekoppelte Lötspitze zu erzeugen, wodurch sie zu einem verbesserten Arbeitsergebnis führt. Des Weiteren ist es nützlich, wenn der Energiewandler zur Absorption einer variablen Energieleistung ausgebildet ist, sodass er zum Übertragen unterschiedlicher Wärmeenergievolumen auf die Lötspitze verwendet werden kann.

Um eine erhöhte Laserleistung zu absorbieren, ist vorzugsweise vorgesehen, dass der Energiewandler durchgreifend oder teilweise wärmebehandelt ist. Eine durchgreifende Gefügeumwandlung des Energiewandlers kann beispielsweise durch Glühen oder Härten verursacht werden. Um eine Gefügeumwandlung lediglich an einem Oberflächenabschnitt des Energiewandlers zu verursachen, kann beispielsweise ein Diffusionsverfahren, wie etwa Einsatzhärten verwendet werden.

Eine besonders hohe Laserleistung lässt sich auch dann von dem Energiewandler absorbieren, wenn dieser zumindest teilweise beschichtet ist. Dazu kann der Energiewandler mittels eines Beschichtungsverfahrens, wie beispielsweise Borieren oder Nitrieren, bearbeitet werden. Die auf den Energiewandler aufgebrachte Oberflächenschicht kann dafür sorgen, dass auf der Oberfläche des Energiewandlers keine Verschleißerscheinungen durch die Laserstrahlabsorption entstehen, beispielsweise chemische Reaktionen. Gemäß einer weiteren Ausführungsform der Erfindung ist die Laserquelle derart ausgebildet bzw. ist der Laserstrahl innerhalb des Lötkolbens derart führbar, dass sein Fokus vor, auf oder hinter einer Oberfläche der zu erwärmenden Lötspitze bzw. des zu erwärmenden Energiewandlers ist. Wenn der Fokus des Laserstrahls vor oder hinter der absorbierenden Oberfläche der Lötspitze bzw. des Energiewandlers liegt, dann ist es möglich einen Verschleiß der Lötspitze bzw. des Energiewandlers zu reduzieren, weil die Lötspitze bzw. der Energiewandler weniger Energieleistung pro Flächeneinheit absorbiert. Durch die vergrößerte Fläche des Energieeintrags bei dieser Ausführungsform ist es auch möglich, eine homogene Erwärmung der Lötspitze bzw. des Energiewandlers zu verbessern. Andererseits ermöglicht ein Ausrichten des Laserstrahlfokus auf der Oberfläche der Lötspitze bzw. des Energiewandlers verkürzte Aufheizzeiten, sodass der Lötkolben schneller auf Betriebstemperatur gebracht werden kann. Gemäß der Erfindung ist die den Laserstrahl erzeugende Laserquelle dazu ausgebildet, den Fokus des Laserstrahls in unterschiedlichen Entfernungen relativ zu der Oberfläche der zu erwärmenden Lötspitze bzw. des Energiewandlers einzustellen, insbesondere in einem variierbaren Abstand von ± 3cm, sodass Aufheizzeiten des Lötkolbens variierbar sind.

Eine besonders hohe Absorptionsrate kann insbesondere dann erreicht werden, wenn der Energiewandler zumindest teilweise eine schwarze Oberfläche aufweiset, vornehmlich an der Stelle des Fokus des Laserstrahls.

Ein effektiver Wärmetransport vom Energiewandler auf die Lötspitze kann insbesondere dann erreicht werden, wenn der Energiewandler in direktem Kontakt mit der Lötspitze steht. Dies ermöglicht einen besonders schnellen und großen Wärmeübergang vom Energiewandler auf die Lötspitze.

Gemäß einer weiteren Ausführungsform kann die Lötspitze den Energiewandler zumindest teilweise umhüllen, sodass für die Wärmeübertragung eine ausreichend große Fläche zur Verfügung steht, die abermals ein schnelles Aufheizen der Lötspitze ermöglicht.

Vorzugsweise ist der Energiewandler relativ zur Lötspitze konzentrisch angeordnet. Dies bedingt den technischen Effekt, dass die Lötspitze gleichmäßig auf eine gewünschte Betriebstemperatur gebracht werden kann sowie Energieverluste reduzierbar sind.

Für ein schnelles Abmontieren der Lötspitze kann es gemäß einer weiteren Ausführungsform vorteilhaft sein, wenn der Energiewandler lösbar mit der Lötspitze verbunden ist. Möglich wäre es beispielsweise, dass die Lötspitze auf den Energiewandler aufsteckbar ist bzw. mit dem Energiewandler verschraubbar ist. Während sich eine auf dem Energiewandler aufsteckbare Lötspitze besonders für einen schnellen Austausch eignet, kann durch eine vorgesehene Schraubenverbindung eine besonders stabile Fixierung zwischen dem Energiewandler und der Lötspitze hergestellt werden.

Zweckmäßig kann es auch sein, wenn der Energiewandler integral mit der Lötspitze ausgebildet ist. Dadurch ist es möglich zu verhindern, dass sich während der Arbeit die Lötspitze vom Energiewandler lockert, wodurch sich außerdem der Wärmeübertragungskoeffizient an einer Grenzfläche zwischen dem Energiewandler und der Lötspitze verbessern lässt. Eine besonders vorteilhafte integrale Ausbildung des Energiewandlers mit der Lötspitze kann dadurch erreicht werden, dass die Lötspitze mittels eines Gießprozesses auf dem Energiewandler ausgebildet ist. Dies bedingt eine besonders gute Übertragung von Wärme vom Energiewandler auf die Lötspitze.

Gemäß einer weiteren Ausführungsform der Erfindung umfasst der Energiewandler einen rotationssymmetrischen Körper. Dieser ist einfach sowie kostengünstig herstellbar und kann dafür sorgen, dass sich der Wärmetransport zwischen dem Energiewandler und der damit gekoppelten Lötspitze besonders effektiv gestalten lässt.

In einer weiteren vorteilhaften Ausführungsform der Erfindung ist vorgesehen, dass der Energiewandler eine dem Laserstrahl entgegengerichtete konkave, insbesondere kegelförmige Oberfläche aufweist. Dadurch lässt sich die Absorptionsrate der Laserleistung optimieren. Dabei können gegebenenfalls von der konkaven Oberfläche des Energiewandlers reflektierte Laserstrahlen noch innerhalb des konkaven Oberflächenbereichs absorbiert werden, sodass die Absorptionsrate steigt. Gemäß einer einfach herstellbaren Ausführungsform kann der Energiewandler jedoch auch eine dem Lesestrahl endgegengerichtete ebene Oberfläche aufweisen.

Eine erhöhte Absorptionsrate sowie reduzierte Reflexionsrate des Laserstrahls kann dadurch erreicht werden, wenn in dem Energiewandler bzw. in der Lötspitze eine Sacklochbohrung für den Eintritt des Laserstrahls vorgesehen ist. Dadurch ist es insbesondere möglich, dass reflektierte Strahlen nicht die Sacklochbohrung verlassen, sondern im Inneren der Sacklochbohrung verbleiben und zur Erwärmung des Energiewandlers bzw. der Lötspitze dienen.

Um das Maß von reflektierten Laserstrahlen zu reduzieren, kann es vorteilhaft sein, wenn der Laserstrahl im Wesentlichen senkrecht auf eine Oberfläche des Energiewandlers leitbar ist. Dadurch ist es möglich, ein besonders hohes Maß an Laserenergie in den Energiewandler einzubringen.

Eine andere vorteilhafte Ausführungsform sieht vor, dass der Laserstrahl entlang eines Musters, beispielsweise entlang einer Mäanderbahn, die Oberfläche der Lötspitze oder des Energiewandlers abtastet, um den Energieeintrag an unterschiedlichen Stellen vorzusehen. Dadurch kann die Lötspitze oder der Energiewandler besonders schonend aufgeheizt werden.

Für ein verbessertes, insbesondere schnelles Aufheizen der Lötspitze kann vorzugsweise die Form des Energiewandlers einer maßstabsgetreuen Verkleinerung der Form der Lötspitze entsprechen. Dies kann insbesondere auch Vorteile in der Herstellung sowie im Zusammenbau der Lötspitze mit dem Energiewandler mit sich bringen.

Gemäß einer anderen Ausführungsform der Erfindung kann der Energiewandler eine Absorptionsscheibe, vorzugsweise in zylindrischer Form, umfassen, die dem Laserstrahl entgegengerichtet ist. Die Absorptionsscheibe kann dazu dienen, den Energiewandler gut im Lötkolben sowie an der Lötspitze zu befestigen. Ebenso kann die Absorptionsscheibe dazu vorgesehen sein, die durch den Laserstrahl erzeugte Laserleistung verlustarm zu absorbieren sowie diese in Form von Wärme an den Rest des Energiewandlers zu verteilen.

Vorzugsweise umfasst der Energiewandler mindestens einen Leiterabschnitt. Der Leiterabschnitt kann zur Befestigung des Energiewandlers an der Lötspitze dienen. Ebenso kann der Leiterabschnitt derart geformt sein, dass er eine günstige Wärmeübertragung bis ins Innere der Lötspitze ermöglicht.

Gemäß einer weiteren vorteilhaften Ausführungsform der Erfindung ist vorgesehen, dass der Leiterabschnitt fingerförmig in die Lötspitze hineinragt. Vorzugsweise kann der Leiterabschnitt ein Außengewinde umfassen, welches mit einem in der Lötspitze vorgesehenen Innengewinde verschraubbar ist. Dadurch ist es möglich, die Lötspitze fest auf den Energiewandler aufzuschrauben, wobei durch die Gewinde auch eine Oberflächenvergrößerung und somit ein verbesserter Wärmetransport zwischen dem Energiewandler und der Lötspitze zustande kommt.

Die Erfindung besteht darin, dass der Laserstrahl mittels eines zumindest in dem Lötkolben angeordneten Lichtleiters transportierbar ist, wobei der Lichtleiter vornehmlich entlang des Laserwegs verläuft. Der Lichtleiter ermöglicht einen flexiblen Transport der Laserstrahlung. Dabei ist es möglich, den Lichtleiter entlang zumindest eines Abschnitts des Laserwegs zu führen. Beispielsweise kann der Lichtleiter relativ zu der Oberfläche des Energiewandlers, an welcher die Absorption des Laserstrahls stattfindet, senkrecht ausgerichtet sein, wobei dies nicht zwingend notwendig ist. Ebenfalls könnte es sein, dass der Lichtleiter mindestens abschnittsweise nicht senkrecht zur Oberfläche des Energiewandlers ausgerichtet ist.

Gemäß der Erfindung ist eine Austrittsöffnung des Lichtleiters in einem gleichbleibenden Abstand zum Energiewandler, sprich zur Absorptionsoberfläche angeordnet. Dadurch ist es möglich, dass die von der Lötspitze bzw. vom Energiewandler absorbierte Laserleistung konstant gehalten werden kann. Dies begünstigt ein gleichmäßiges Aufheizen der Lötspitze, wodurch sich Werkstücke qualitativ besser bearbeiten lassen.

Für eine optimierte Übertragung des Laserstrahls kann vorgesehen sein, dass der Lichtleiter Glasfasern umfasst. Diese sorgen dafür, dass es entlang des Lichtleiters zu keiner Verlustleistung kommt.

Für eine ortsfeste Ausrichtung des Lichtleiters innerhalb des Lötkolbens kann eine Halterung vorgesehen sein. Die Halterung befestigt und richtet den Lichtleiter innerhalb des Lötkolbens aus. Insbesondere ist die Halterung nahe an der Austrittsöffnung des Lichtleiters befestigt, damit diese stabil innerhalb des Lötkolbens und vor allem in gleichbleibendem Abstand zur Absorptionsoberfläche der Lötspitze oder des Energiewandlers fixierbar ist.

Gemäß der Erfindung ist eine Laserquelle zur Erzeugung des Laserstrahls vorgesehen, die vorzugsweise im Lötkolben angeordnet ist. Mittels der Laserquelle lässt kann der benötigte Laserstrahl erzeugt werden, der zum raschen und effektiven Aufheizen der Lötspitze die notwendige Laserleistung überträgt.

Gemäß einer bevorzugten Ausführungsform der Erfindung umfasst der Lötkolben als Laserquelle mindestens einen Diodenlaser. Um einen verbesserten Energieeintrag in der Lötspitze bzw. im Energiewandler zu erhalten, ist der mindestens eine Diodenlaser dazu ausgebildet, in einem Wellenlängenbereich zwischen 500nm bis 1500nm zu arbeiten. In diesem Wellenlängenbereich ist es möglich, eine besonders hohe Absorptionsrate, d. h. einen großen Energieeintrag im Energiewandler bzw. in der Lötspitze zu erreichen.

Um mittels des Energiewandlers bzw. der Lötspitze einen Absorptionsgrad von nahezu 90% der Laserstrahlleistung zu erhalten, ist vorzugsweise die Oberfläche des Energiewandlers bzw. der Lötspitze, auf welche der Laserstrahl gerichtet ist, geraut ausgebildet. Wenn der Laserstrahl auf eine raue Oberfläche des Energiewandlers bzw. der Lötspitze trifft, können reflektierte Strahlen erheblich reduziert werden. Selbst die wenigen reflektierten Strahlen bleiben nicht im fokussierten Bereich und haben keine nennenswerte Intensität, sodass der Lötkolben nicht an unerwünschter Stelle erwärmt wird.

Vorzugsweise ist die Laserquelle für einen gepulsten Betrieb ausgebildet. Dabei kann es sich um einen Kurz- oder Ultrakurzpulslaser handeln. Insbesondere lassen sich durch einen Pulslaser sehr hohe Spitzenintensitäten erreichen. Ein weiterer Vorteil besteht darin, dass sich mittels eines Pulslasers die Erwärmung des Energiewandlers bzw. der Lötspitze gut regeln lässt. Alternativ zum Pulslaser kann jedoch auch ein Dauerstrichlaser (CW-Laser) als Laserquelle eingesetzt werden.

Eine weitere Ausführungsform der Erfindung sieht vor, dass der Lötkolben einen Temperatursensor umfasst, der zum Erfassen der Temperatur der Lötspitze und/oder des Energiewandlers ausgebildet ist. Vorzugsweise ist der Temperatursensor funktional mit einer Steuereinheit verbunden, die dazu ausgebildet ist, durch den Temperatursensor erfasste Temperaturwerte als Steuereingangssignale zu erfassen sowie basierend auf diesen Eingangssignalen eine Regelgröße für den Betrieb der Laserquelle zu erzeugen, sodass sich die Laserleistung der Laserquelle in Abhängigkeit einer durch den Temperatursensor an dem Energiewandler bzw. an der Lötspitze erfassten Temperatur regeln lässt. Dadurch lässt sich auf einfache Art und Weise eine effektive Temperaturregelung der Lötspitze bzw. des Energiewandlers realisieren. Optional kann dabei eine kontinuierliche oder zeitweise Regulierung der Laserleistung durch die Steuereinheit durchgeführt werden.

Gemäß einer weiteren Ausführungsform kann die Laserquelle zum Erzeugen des Laserstrahls mindestens eine Laserdiode umfassen. Vorzugsweise ist durch die Laserdiode eine Leistung von mindestens 10 Watt, insbesondere jedoch 20 Watt, erreichbar. Damit lässt sich ein besonders hoher Energieeintrag zum Aufheizen der Lötspitze erreichen. Vorzugsweise ist die Laserdiode derart mit dem Lichtleiter gekoppelt, dass der durch die Laserdiode erzeugte Laserstrahl vom Lichtleiter gut aufnehmbar ist und auf den Energiewandler bzw. die Lötspitze gelenkt werden kann.

Zum verbesserten Einsatz umfasst die Lötspitze und/oder der Energiewandler vornehmlich ein wärmeleitfähiges, insbesondere metallisches Material. Vorzugsweise umfasst die Lötspitze und/oder der Energiewandler Aluminium, Eisen, Stahl, Edelstahl, Silber, Gold, Nickel und/oder Kupfer, um einen effektiven Wärmetransport sicherzustellen. Wie es zuvor bereits im Zusammenhang mit dem Energiewandler beschrieben wurde, kann auch die Lötspitze gemäß einer Ausführungsform durchgreifend oder teilweise, insbesondere mindestens bereichsweise an ihrer Oberfläche wärmebehandelt sein. Dadurch ist es möglich, die bereits im Zusammenhang mit dem Energiewandler erwähnten Verfahren heranzuziehen. Besonders gut kann die Lötspitze auch dann aufgeheizt werden, wenn sie einen rotationssymmetrischen Körper umfasst. Der Energiewandler ist vorzugsweise mittels eines Gießprozesses als Volumenabsorber für den Laserstrahl ausgebildet und wird insbesondere aus formbarem Material wie Glas, Keramik, Gel, Kristall, Flüssigkeit und/oder den oben genannten Metallen hergestellt.

Die Erfindung betrifft auch ein Lötsystem mit einer Lötstation und einem Lötkolben gemäß einer der zuvor beschriebenen Ausführungsformen. Vorzugsweise ist die Lötstation über eine Leitung mit dem Lötkolben verbunden. Gemäß einer Ausführungsform kann der Lichtleiter zumindest teilweise in der Leitung angeordnet sein. Dadurch ist es möglich, den Laserstrahl mittels des Lichtleiters durch die Leitung zu führen.

Alternativ zu einer Anordnung der Laserquelle direkt im Lötkolben ist es auch möglich, dass die Laserquelle in der Lötstation vorgesehen ist. Dabei wird der von der Laserquelle erzeugte Laserstrahl über den in der Leitung angeordneten Lichtleiter zum Lötkolben transportiert.

Wenn sich allerdings die Laserquelle im Lötkolben befindet, ist die zwischen der Lötstation und dem Lötkolben vorgesehene Leitung als elektrisches Kabel ausgebildet, um die Laserquelle mit Strom zur Erzeugung des Laserstrahls zu versorgen. Ein Lichtleiter muss dann nicht in der Leitung vorgesehen sein.

Außerdem kann sich die Erfindung auf ein Verfahren zum Erhitzen einer Lötspitze eines Lötkolbens beziehen. Erfindungsgemäß wird die Lötspitze mittels eines in dem Lötkolben zumindest teilweise entlang eines Laserwegs verlaufenden Laserstrahls erhitzt.

Gemäß einer besonderen Ausführungsform wird der Laserstrahl auf einen mit der Lötspitze gekoppelten Energiewandler gelenkt. Der Energiewandler wird zur Absorption der Laserleistung verwendet, wobei die in ihm erzeugte Wärme auf die mit ihm gekoppelte Lötspitze transferiert wird. Vorzugsweise wird der Laserstrahl durch eine Laserquelle erzeugt, die im Lötkolben oder in einer mit dem Lötkolben verbundenen Lötstation vorgesehen ist. Der Laserstrahl wird vorzugsweise zumindest teilweise entlang eines Laserwegs mittels eines Lichtleiters innerhalb des Lötkolbens geführt. Durch den Lichtleiter lässt sich der Laserstrahl auf einen bestimmten Punkt auf einer Oberfläche, beispielsweise des Energiewandlers lenken.

Gemäß der Erfindung wird ein Abstand zwischen einer Austrittsöffnung des Lichtleiters und dem Energiewandler konstant gehalten. Dadurch wird erreicht, dass ein Energieeintrag in den Energiewandler konstant bleibt, wodurch eine gleichmäßige Erwärmung der Lötspitze erreichbar ist. Dafür kann insbesondere eine Halterung verwendet werden. Ausführungsbeispiele der Erfindung werden genauer anhand der folgenden Figuren erläutert. Dabei zeigen:
- Figur 1: Eine Schnittdarstellung des Lötkolbens,
- Figur 2: Ein erstes Beispiel des Lötsystems
und
- Figur 3: Ein erfindungsgemäßes Lötsystem.

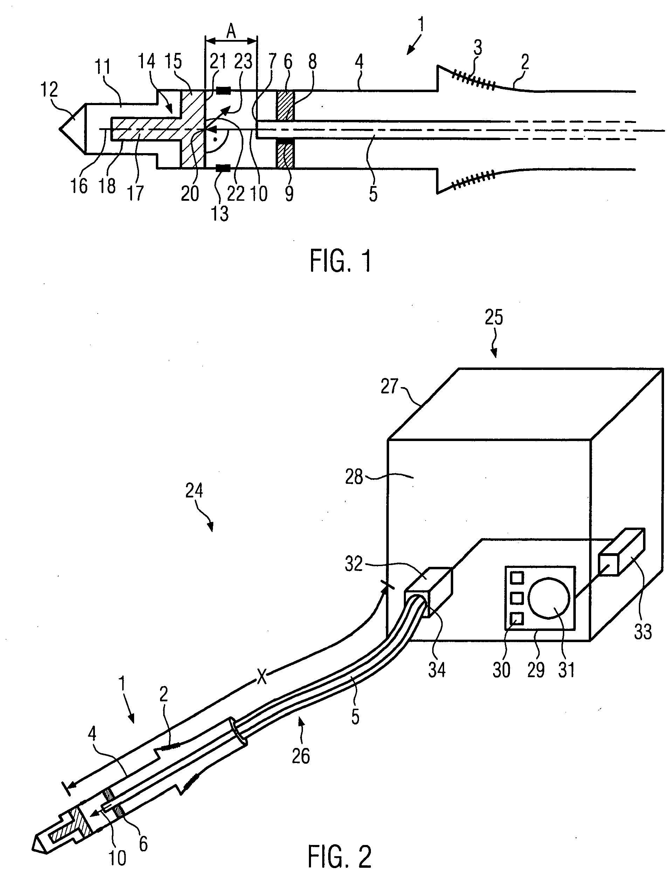

Die Figur 1 zeigt einen Lötkolben 1. Zur besseren Darstellung ist der Lötkolben 1 in einer Schnittdarstellung gezeigt. Der Lötkolben 1 umfasst einen Griff 2. Am Griff 2 kann ein Benutzer den Lötkolben 1 in die Hand nehmen, um den Lötkolben 1 sicher zum Bearbeiten von Werkstücken zu führen, beispielsweise um eine Lötnaht zwischen den zu bearbeitenden Werkstücken zu ziehen. Der Griff 2 kann aus einem Kunststoffmaterial hergestellt sein, damit eine bessere Griffigkeit für den Benutzer entsteht. Insbesondere kann der Griff 2 einen Rillenbereich 3 umfassen, vornehmlich an der Stelle wo die Finger des Benutzers ansetzen. Durch den Rillenbereich 3 kann verhindert werden, dass die Hand des Benutzers vom Griff 2 abrutscht. Ebenfalls kann der Rillenbereich 3 durch die Verwendung eines rutschfesten Materials, beispielsweise einer Gummierung, ersetzt oder ergänzt werden.

Der Lötkolben 1 umfasst auch einen Kolbenabschnitt 4. Der Kolbenabschnitt 4 ist am Griff 2 befestigt. Dabei kann der Kolbenabschnitt 4 mit dem Griff 2 lösbar befestigt, beispielsweise verschraubt sein. Alternativ dazu kann der Griff 2 mit dem Kolbenabschnitt 4 einteilig ausgebildet sein.

Innerhalb des Kolbenabschnitts 4 verläuft ein Lichtleiter 5. Gemäß der Figur 1 erstreckt sich der Lichtleiter 5 entlang eines wesentlichen Abschnitts des Kolbenabschnitts 4 sowie innerhalb des Griffs 2. Der Lichtleiter 5 kann durch eine Halterung 6 innerhalb des Kolbenabschnitts 4 ausgerichtet werden. Die Halterung 6 ist vorzugsweise im Kolbenabschnitt 4 stabil fixiert, um eine Austrittsöffnung 7 des Lichtleiters 5 ortsfest innerhalb des Kolbenabschnitts 4 zu halten. Beispielsweise kann die Halterung 6 integral mit dem Kolbenabschnitt 4 ausgebildet sein, wobei es gemäß einer anderen Ausführung auch möglich ist, dass die Halterung innerhalb des Kolbenabschnitts 4 lösbar angeordnet ist, beispielsweise verschraubt ist. In der Halterung 6 ist eine Halterungsöffnung 8 ausgebildet, durch die der Lichtleiter 5 geführt ist. In der Halterungsöffnung 5 können Spannmittel 9 vorgesehen sein, die eine stabile Fixierung des Lichtleiters 5 gewährleisten. Beispielsweise können die Spannmittel 9 den Lichtleiter 5 durch Kraftschluss innerhalb der Halteöffnung 8 halten, sodass die Austrittsöffnung 7 ortsfest im Kolbenabschnitt 4 positionierbar ist. Um zu verhindern, dass eine Wärmeübertragung zwischen dem Lichtleiter 5 und dem Kolbenabschnitt 4 stattfindet, können vorzugsweise die Spannmittel 9 und/oder die Halterung 6 aus einem wärmeisolierenden Material hergestellt sein.

Der Lichtleiter 5 ist zum Transport eines Laserstrahls 10 vorgesehen. Zum Transport des Laserstrahls 10 kann der Lichtleiter 5 beispielsweise Glasfasern umfassen. Wie später noch genauer erläutert wird, dient der Laserstrahl 10 zum Aufheizen einer Lötspitze 11. Die Lötspitze 11 ist am Kolbenabschnitt 4 befestigt. Die Lötspitze 11 umfasst einen Kopf 12, der zum Bearbeiten von Werkstücken ausgebildet ist. Der Kopf 12 kann zur Bearbeitung von Werkstücken unterschiedliche Formen aufweisen, wobei er gemäß der Figur 1 spitzkegelförmig ausgebildet ist.

Die Lötspitze 11 und/oder der Kolbenabschnitt 4 umfassen Befestigungsmittel 13, die dazu ausgebildet sind, die Lötspitze 11 am Kolbenabschnitt 4 zu befestigen. Beispielsweise können die Befestigungsmittel 13 eine Schraubenverbindung umfassen. Alternativ dazu können die Befestigungsmittel 13 lediglich als Steckverbindung ausgebildet sein, die über Reib- oder Magnetkraftschluss die Lötspitze 11 an den Kolbenabschnitt 4 halten. Innerhalb der Lötspitze 11 ist ein Energiewandler 14 vorgesehen. Gemäß der Figur 1 erstreckt sich der Energiewandler 14 innerhalb der Lötspitze 1. Alternativ dazu kann jedoch gemäß der Erfindung vorgesehen sein, dass der Energiewandler 14 zumindest teilweise innerhalb des Kolbenabschnitts 4 angeordnet ist.

Der Energiewandler 14 ist gemäß der Figur 1 als rotationssymmetrischer Körper ausgebildet, wobei seine Form im Wesentlichen der Form eines Pilzes bzw. einer Schraube entspricht. Der Energiewandler 14 ist relativ zum Lichtleiter 5 derart ausgerichtet, dass der aus der Austrittsöffnung 7 austretende Laserstrahl 10 auf ihn trifft. Zur Absorption des Laserstrahls 10 umfasst der Energiewandler eine Absorptionsscheibe 15. Die Absorptionsscheibe 15 ist relativ zum Laserstrahl 10 orthogonal ausgerichtet, wobei gemäß der Figur 1 der Laserstrahl 10 entlang einer Rotationsachse 16 des Energiewandlers 14 verläuft. Von der Absorptionsscheibe 15 erstreckt sich ein Leiterabschnitt 17. Gemäß der Figur 1 erstreckt sich der Leiterabschnitt 17 in das Innere der Lötspitze 11 hinein, fast bis zum Kopf 12.

An einem vorderen Ende des Leiterabschnitts 17 ist ein Außengewindeabschnitt 18 ausgebildet. Der Außengewindeabschnitt 18 ist mit einem in der Lötspitze 11 ausgebildeten komplementären Innengewindeabschnitt verschraubbar, um den Energiewandler 14 in der Lötspitze 11 zu befestigen. Alternativ dazu kann der Energiewandler 14 integral mit der Lötspitze 11 ausgebildet sein, beispielsweise durch einen Gießprozess.

Die Figur 1 zeigt auch einen Abstand A, der zwischen der Austrittsöffnung 7 des Lichtleiters 5 und einem Fokus 20 auf einer Absorptionsoberfläche 21 der Absorptionsscheibe 15 vorliegt. Gemäß der Figur 1 ist der Lötkolben 1 derart ausgebildet, dass der Abstand A unveränderbar ist. Dadurch bleibt die am Fokus 20 eingebrachte, mittels des Laserstrahls 10 transportierte Laserlichtenergie konstant. Der Energiewandler 14 ist zur

Absorption des Laserstrahls 10 vorgesehen, wobei er sich dadurch stark erwärmt und die mit ihm gekoppelte Lötspitze 11 aufheizt.

Für eine verbesserte Absorption des Laserstrahls 10 kann die Absorptionsoberfläche 21 der Absorptionsscheibe 15 zumindest in einem Bereich des Fokus 20 eine schwarze Oberfläche 22 aufweisen.

Gemäß der Figur 1 umfasst die Absorptionsscheibe 15 eine ebene Absorptionsoberfläche 21. Dies ist jedoch nicht zwingend notwendig. Vielmehr ist es auch möglich, dass die Absorptionsscheibe 15 eine zumindest teilweise konkav geformte, insbesondere kegelförmige Absorptionsoberfläche 21 umfasst. Dadurch bestünde die Möglichkeit Reflexionen 23 des Laserstrahls 10 in einem Bereich der konkaven Absorptionsoberfläche zu absorbieren.

Ebenfalls kann der in der Figur 1 gezeigte Kolbenabschnitt 4 aus einem Material hergestellt sein, das keine der reflektierten Laserstrahlen 23 absorbiert, um zu verhindern, dass sich der Kolbenabschnitt 4 erwärmt. Gleiches gilt auch für die Halterung 6.

Obwohl der in der Figur 1 gezeigte Laserstrahl 10 mittels des Lichtleiters 5 innerhalb des Lötkolbens 1 zumindest abschnittsweise transportiert wird, kann der Laserstrahl 10 ebenso ohne den Lichtleiter 5, also ohne zusätzliche Transportmittel, innerhalb des Lötkolbens 1 auf die Absorptionsoberfläche 21 des Energiewandlers 4 geführt werden.

Die Figur 2 zeigt ein Lötsystem 24. Das Lötsystem 24 umfasst eine Lötstation 25 sowie den Lötkolben 1, der über eine Leitung 26 mit der Lötstation 25 funktional verbunden ist. Die Lötstation 25 umfasst ein Gehäuse 27 mit einem Display 28. Mittels des Displays 28 können dem Benutzer Betriebsparameter angezeigt werden. Die Lötstation 25 umfasst des Weiteren eine Bedienkonsole 29, über die sich spezifische Betriebsparameter für das Lötsystem einstellen lassen. Zur Einstellung kann die Bedienkonsole beispielsweise Schalter 30 bzw. einen Drehschalter 31 aufweisen.

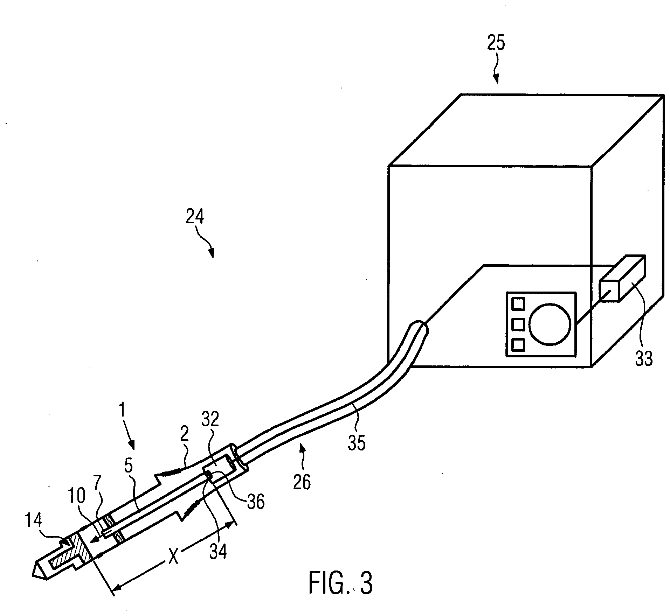

Gemäß der Figur 2 ist eine Laserquelle 32 innerhalb der Lötstation 25 vorgesehen. Die Laserquelle 32 ist funktional mit einer Stromversorgung 33 verbunden. Die Laserquelle 32 erzeugt den zum Aufheizen der Lötspitze 11 verwendeten Laserstrahl 10. Die Laserquelle 32 umfasst eine Laseraustrittsöffnung 34, die mit einem Ende der Leitung 26 gekoppelt ist. Innerhalb der Leitung 26 verläuft der Lichtleiter 5. Gemäß der Figur 2 erstreckt sich der Lichtleiter 5 von der Laseraustrittsöffnung 34 entlang der Leitung 26, durch den Griff 2 bis ins Innere des Kolbenabschnitts 4. Dort ist er durch die Halterung 6 positioniert. Dabei legt der Laserstrahl 10 einen Laserweg X zwischen der Laserquelle 32 und der Absorptionsoberfläche 21 des Energiewandlers 14 zurück. Wie später gemäß der Figur 3 gezeigt wird, lässt sich der Laserweg X dadurch verkürzen, indem die Laserquelle 32 nicht in der Laserstation 25, sondern direkt im Lötkolben 1 vorgesehen ist.

Gemäß der Figur 2 findet die Erzeugung des Laserstrahls 10 innerhalb der Lötstation 25 statt, wobei der Laserstrahl 10 mittels des Lichtleiters 5 innerhalb der Leitung 26 zum Lötkolben 1 transportierbar ist. Weil bei der Figur 2 die zur Erzeugung des Laserstrahls 10 vorgesehne Laserquelle 32 innerhalb der Lötstation 25 angeordnet ist, kann das Gesamtgewicht des Lötkolbens 1 erheblich reduziert werden. Dadurch lässt sich der Lötkolben 1 besonders gut von Benutzerhand führen. Dadurch, dass bei der Figur 2 durch die Leitung 26 keine Stromversorgung für den

Lötkolben vorgesehen ist, lässt sich auch die Leitung 26 gewichtsreduziert herstellen, wodurch zusätzlich eine Handhabung des Lötkolbens 1 verbessert werden kann.

Alternativ zur Figur 2 zeigt die Figur 3 eine Ausführungsform der Erfindung. In der Figur 3 ist das Lötsystem 24 ähnlich wie bei der Figur 2 aufgebaut. Gemäß der Figur 3 ist die Lötstation 25 über die Leitung 26 mit dem erfindungsgemäßen Lötkolben 1 verbunden. Im Gegensatz zum in der Figur 2 gezeigten Beispiel ist bei der Figur 3 die Laserquelle 32 jedoch direkt im Lötkolben 1 angeordnet. Die Laserquelle 32 wird dabei von einem in der Leitung 26 geführten Versorgungskabel 35 mit Strom aus der Stromversorgung 33 gespeist. Die Laserquelle 32 ist an der Laseraustrittsöffnung 34 mit dem Lichtleiter 5 gekoppelt. Aus der Laseraustrittsöffnung 34 tritt der Laserstrahl 10 in den nun verkürzten Lichtleiter 5 hinein, von welchem er zur Austrittsöffnung 7 transportiert wird. An der Austrittsöffnung 7 tritt der Laserstrahl 10 aus dem Lichtleiter 5 heraus und ist auf den Energiewandler 14 gerichtet. Zur Erzeugung des Laserstrahls umfasst die Laserquelle 32 gemäß der Figur 3 eine Laserdiode 36, die im Bereich der Laseraustrittsöffnung 34 angeordnet ist.

Gemäß dem Ausführungsbeispiel der Figur 3 kann der Laserweg X erheblich reduziert werden. Dabei ist es möglich, dass der Laserstrahl 10 den Laserweg X geradlinig durchläuft, wodurch sich eine extrem hohe Energiedichte sowie sich ein erhöhter Energieeintrag am Energiewandler 14 einstellen lässt. Gemäß der Figur 3 ist die Laserquelle 32 im Griff 2 des Lötkolbens 1 vorgesehen. Allerdings ist es auch möglich, die Laserquelle 32 an anderer Stelle innerhalb des Lötkolbens 1 anzuordnen, beispielsweise im Kolbenabschnitt 4.

Gemäß der Erfindung lässt sich die Lötspitze 11 des Lötkolbens 1 mittels des im Lötkolben 1 geführten Laserstrahls 10 schnell auf eine gewünschte Betriebstemperatur bringen. Insbesondere ist es möglich, dass durch Absorption des Laserstrahls 10 mittels des Energiewandlers 14 eine konstante und gleichmäßige Wärmeübertragung auf die Lötspitze 11 stattfindet. Der erfindungsgemäße Lötkolben 1 kann zur qualitativen Bearbeitung von Werkstücken eingesetzt werden.

## Patentansprüche

1. Lötkolben (1) mit einer Lötspitze (11), die mittels eines in dem Lötkolben (1) zumindest teilweise entlang eines Laserwegs (X) verlaufenden Laserstrahls erhitzbar ist, wobei
der Lötkolben (1) einen Energiewandler (14) umfasst, der zur Absorption des Laserstrahls (10) ausgebildet ist und mit der Lötspitze (11) gekoppelt ist, um diese zu erhitzen,
**dadurch gekennzeichnet, dass**
innerhalb des Lötkolbens (1) eine Laserquelle (32) zum Erzeugen des Laserstrahls (10) angeordnet ist;
wobei eine den Laserstrahl erzeugende Laserquelle (32) dazu ausgebildet ist, den Fokus des Laserstrahls in unterschiedlichen Entfernungen relativ zu der Oberfläche des zu erwärmenden Energiewandlers einzustellen, sodass Aufheizzeiten des Lötkolbens variierbar sind;
wobei der Laserstrahl mittels eines in dem Lötkolben angeordneten Lichtleiters transportierbar ist, wobei der Lichtleiter entlang des Laserwegs verläuft; wobei ein Abstand zwischen einer Austrittsöffnung des Lichtleiters und dem Energiewandler vorliegt, der konstant gehalten wird,
wobei die Laserquelle (34) eine Laseraustrittsöffnung umfasst, die mit einem Ende des Lichtleiters gekoppelt ist.

2. Lötkolben nach Anspruch 1, **dadurch gekennzeichnet, dass** der Energiewandler (14) in direktem Kontakt mit der Lötspitze (11) steht.

3. Lötkolben nach Anspruch 1 oder 2, **dadurch gekennzeichnet, dass** der Energiewandler (14) ein wärmeleitfähiges Material aufweist.

4. Lötkolben nach einem der vorangehenden Ansprüche, **dadurch gekennzeichnet, dass** der Energiewandler (14) zumindest teilweise von der Lötspitze (11) umhüllt ist.

5. Lötkolben nach einem der vorangehenden Ansprüche, **dadurch gekennzeichnet, dass** der Energiewandler (14) lösbar mit der Lötspitze (11) verbunden ist.

6. Lötkolben nach einem der vorangehenden Ansprüche, **dadurch gekennzeichnet, dass** der Energiewandler (14) integral mit der Lötspitze (11) ausgebildet ist, wobei insbesondere die Lötspitze (11) mittels eines Gießprozesses auf dem Energiewandler (14) ausgebildet ist.

7. Lötkolben nach einem der vorangehenden Ansprüche, **dadurch gekennzeichnet, dass** der Energiewandler (14) eine dem Laserstrahl (10) entgegengerichtete konkave Oberfläche aufweist.

8. Lötkolben nach einem der vorangehenden Ansprüche, **dadurch gekennzeichnet, dass** der Energiewandler (14) mittels eines Gießprozesses als Volumenabsorber für den Laserstrahl (10) ausgebildet ist.

9. Lötkolben nach einem der vorangehenden Ansprüche, **dadurch gekennzeichnet, dass** der Energiewandler (14) aus formbarem Material, umfassend Glas, Keramik, Gel, Kristall und/oder Flüssigkeit hergestellt ist.

10. Lötkolben nach einem der vorangehenden Ansprüche, **dadurch gekennzeichnet, dass** der Energiewandler (14) eine kegelförmige Absorptionsoberfläche (21) aufweist.

11. Lötkolben nach einem der vorigen Ansprüche, **dadurch gekennzeichnet, dass** ein Fokus des Laserstrahls (10) vor, auf oder hinter eine den Laserstrahl (10) absorbierende Oberfläche des Energiewandlers (14) fällt.

12. Lötsystem (24) mit einer Lötstation (25) und dem Lötkolben (1) gemäß einem der vorigen Ansprüche, wobei der Lötkolben (1) über eine Leitung (26) mit der Lötstation (25) verbunden ist.

## Claims

1. Soldering iron (1) comprising a soldering tip (11) which can be heated by means of a laser beam extending at least in part along a laser path (X) in the soldering iron (1),
the soldering iron (1) comprising an energy converter (14) which is designed to absorb the laser beam (10) and is coupled to the soldering tip (11) in order to heat it,
**characterized in that** a laser source (32) for generating the laser beam (10) is arranged inside the soldering iron (1);
a laser source (32) generating the laser beam being designed to adjust the focus of the laser beam at different distances relative to the surface of the energy converter to be heated so that the heating times of the soldering iron can be varied;
it being possible to transport the laser beam by means of a light guide arranged in the soldering iron, the light guide extending along the laser path; there being a distance between an outlet opening of the light guide and the energy converter, which distance is kept constant, the laser source (34) comprising a laser outlet opening which is coupled to one end of the light guide.

2. Soldering iron according to claim 1, **characterized in that** the energy converter (14) is in direct contact with the soldering tip (11).

3. Soldering iron according to either claim 1 or claim 2, **characterized in that** the energy converter (14) has a thermally conductive material.

4. Soldering iron according to any of the preceding claims, **characterized in that** the energy converter (14) is at least partly encased by the soldering tip (11).

5. Soldering iron according to any of the preceding claims, **characterized in that** the energy converter (14) is detachably connected to the soldering tip (11).

6. Soldering iron according to any of the preceding claims, **characterized in that** the energy converter (14) is formed integrally with the soldering tip (11), the soldering tip (11) in particular being formed on the energy converter (14) by means of a casting process.

7. Soldering iron according to any of the preceding claims, **characterized in that** the energy converter (14) has a concave surface facing the laser beam (10).

8. Soldering iron according to any of the preceding claims, **characterized in that** the energy converter (14) is formed as a volume absorber for the laser beam (10) by means of a casting process.

9. Soldering iron according to any of the preceding claims, **characterized in that** the energy converter (14) is made of malleable material, including glass, ceramic material, gel, crystal and/or liquid.

10. Soldering iron according to any of the preceding claims, **characterized in that** the energy converter (14) has a conical absorption surface (21).

11. Soldering iron according to any of the preceding claims, **characterized in that** a focus of the laser beam (10) falls in front of, on or behind a surface of the energy converter (14) that absorbs the laser beam (10).

12. Soldering system (24) comprising a soldering station (25) and the soldering iron (1) according to any of the preceding claims, wherein the soldering iron (1) is connected to the soldering station (25) by a line (26).

## Revendications

1. Fer à souder (1) comportant une panne à souder (11) qui peut être chauffée au moyen d'un faisceau laser qui s'étend au moins partiellement le long d'un trajet laser (X) dans le fer à souder (1),
le fer à souder (1) comprenant un convertisseur d'énergie (14) qui est conçu pour absorber le faisceau laser (10) et qui est accouplé à la panne à souder (11) afin de chauffer celle-ci,
**caractérisé**
**en ce qu'**une source laser (32) servant à générer le faisceau laser (10) est disposée à l'intérieur du fer à souder (1) ;
une source laser (32) générant le faisceau laser étant conçue pour régler le foyer du faisceau laser à différentes distances par rapport à la surface du convertisseur d'énergie à chauffer, de sorte que les temps de chauffage du fer à souder peuvent être modifiés ;
le faisceau laser pouvant être transporté au moyen d'un guide de lumière disposé dans le fer à souder, le guide de lumière s'étendant le long du trajet laser ;
une distance étant ménagée entre une ouverture de sortie du guide de lumière et le convertisseur d'énergie, laquelle distance est maintenue constante,
la source laser (32) comprenant une ouverture de sortie de laser qui est couplée à une extrémité du guide de lumière.

2. Fer à souder selon la revendication 1, **caractérisé en ce que** le convertisseur d'énergie (14) est en contact direct avec la panne à souder (11).

3. Fer à souder selon la revendication 1 ou 2, **caractérisé en ce que** le convertisseur d'énergie (14) présente un matériau thermoconducteur.

4. Fer à souder selon l'une des revendications précédentes, **caractérisé en ce que** le convertisseur d'énergie (14) est au moins partiellement enveloppé par la panne à souder (11).

5. Fer à souder selon l'une des revendications précédentes, **caractérisé en ce que** le convertisseur d'énergie (14) est relié à la panne à souder (11) de manière amovible.

6. Fer à souder selon l'une des revendications précédentes, **caractérisé en ce que** le convertisseur d'énergie (14) est formé d'un seul tenant avec la panne à souder (11), la panne à souder (11) en particulier étant formée sur le convertisseur d'énergie (14) au moyen d'un processus de coulée.

7. Fer à souder selon l'une des revendications précédentes, **caractérisé en ce que** le convertisseur d'énergie (14) présente une surface concave opposée au faisceau laser (10).

8. Fer à souder selon l'une des revendications précédentes, **caractérisé en ce que** le convertisseur d'énergie (14) est conçu sous la forme d'un absorbeur de volume pour le faisceau laser (10) au moyen d'un processus de coulée.

9. Fer à souder selon l'une des revendications précédentes, **caractérisé en ce que** le convertisseur d'énergie (14) est constitué d'un matériau façonnable comprenant du verre, une céramique, un gel, un cristal et/ou un liquide.

10. Fer à souder selon l'une des revendications précédentes, **caractérisé en ce que** le convertisseur d'énergie (14) présente une surface d'absorption conique (21).

11. Fer à souder selon l'une des revendications précédentes, **caractérisé en ce qu'**un foyer du faisceau laser (10) frappe devant, sur ou derrière une surface du convertisseur d'énergie (14) qui absorbe le faisceau laser (10).

12. Système de soudage (24) comportant un poste de soudage (25) et le fer à souder (1) selon l'une des revendications précédentes, le fer à souder (1) étant relié au poste de soudage (25) par l'intermédiaire d'une ligne (26).
